# EUROPÄISCHE PATENTSCHRIFT

(11) **EP 0 498 149 B1**
(45) Veröffentlichungstag und Bekanntmachung des Hinweises auf die Patenterteilung: **05.03.1997**
(21) Anmeldenummer: 92100117.8
(22) Anmeldetag: 07.01.1992
(51) Int. Cl.: B62D 1/18

(54) **Lenksäule für Kraftfahrzeuge**
Steering column for automotive vehicle
Colonne de direction pour véhicules automobiles

(30) Priorität: 02.02.1991 DE 4103202
(43) Veröffentlichungstag der Anmeldung: 12.08.1992
(73) Patentinhaber: LEMFOERDER METALLWAREN AG., D-49441 Lemförde (DE)
(72) Erfinder: Ersoy, Metin, Dr.-Ing., W-6229 Walluf (DE); Vortmeyer, Jens, W-4994 Preus. Oldendorf (DE)

(56) Entgegenhaltungen:
- DE-A- 3 421 795
- US-A- 4 903 540
- US-A- 5 010 779

## Beschreibung

Die Erfindung betrifft eine Lenksäule für Kraftfahrzeuge nach dem Oberbegriff des Patentanspruches 1.

Aus der US-A-4,903,540 ist eine solche Lenksäule bekannt, bei der ein Obergehäuse und ein Untergehäuse durch ein von Hand betätigbares Schneckengetriebe verstellbar miteinander verbunden sind, um eine Feineinstellung der Neigungslage des Lenkrades zu ermöglichen.

Aus der DE-PS 34 09 986 ist ferner eine Lenksäule bekannt, bei der sich eine baulich einfache Anordnung zur Neigungsverstellung des Lenkrades von Hand ergibt. Dazu sind das Untergehäuse und das Obergehäuse durch ein vom Fahrzeuglenker von Hand betätigbares Zwischenglied in verschiedenen Stellungen miteinander verriegelbar, welches eine besondere Verzahnung aufweist, die mit Einzelzähnen am Untergehäuse und am Obergehäuse zusammenwirkt. Bei der bekannten Anordnung werden das Untergehäuse und das Obergehäuse in den eingestellten Positionen des Lenkrades nicht nur kraftschlüssig, sondern auch durch formschlüssig ineinandergreifende Elemente miteinander verriegelt. Damit wird eine wesentliche Sicherheitsanforderung erfüllt.

Andererseits sind motorisch verstellbare Lenksäulen und vor allem solche mit stufenloser Verstellbarkeit zum Beispiel aus der DE-PS 36 38 162 und der DE-PS 35 32 102 bekannt. Motorisch verstellbare Lenksäulen nach diesen Druckschriften sind jedoch im Aufbau wesentlich komplizierter und erfüllen nicht in jedem Fall die Forderung nach formschlüssiger Verbindung der beiden Gehäuse in der jeweils eingestellten Position des Lenkrades.

Aufgabe der Erfindung ist es, eine motorisch antreibbare Verstelleinrichtung einfacher Bauart mit formschlüssig ineinandergreifenden Bauteilen für die Neigungsverstellung des Lenkrades eines Kraftfahrzeuges zu schaffen.

Die Erfindung löst diese Aufgabe durch eine Ausbildung mit Merkmalen nach dem Patentanspruch 1.

Das Schneckengetriebe zwischen dem beweglichen Obergehäuse und dem karosseriefesten Untergehäuse ist in Richtung der vom Obergehäuse ausgehenden Kräfte selbstsperrend, so daß eine in Richtung dieses Kraftflusses formschlüssige Verbindung des Obergehäuses mit dem Untergehäuse besteht, und zwar in jeder Lage des Obergehäuses gegenüber dem Untergehäuse. Die Einstellung ist stufenlos und mit relativ geringen Antriebskräften zu bewirken. Die sich bewegenden Massen werden gering gehalten.

Ein wesentlicher Vorteil dieser Ausbildung besteht darin, daß die Zwischenglieder leicht herstellbar sind und im wesentlichen auch spielfrei Kräfte übertragen. Dazu weist die Schnecke des Schneckengetriebes in dem Rohrgehäuse axial gegeneinander verspannbare Lager auf. Zusätzlich kann das Rohrgehäuse im Eingriffsbereich der Schneckenradverzahnung in die Schneckenverzahnung in Richtung gegen das Schneckenradsegment mit einer Vorspannung belastbar sein. Durch beide Einstellmöglichkeiten kann jedes mögliche Spiel aus den das Obergehäuse mit dem Untergehäuse verbindende Schneckengetriebe herausgenommen werden.

Ein weiterer Vorteil der Erfindung ist schließlich darin zu sehen, daß die mit ihrer Achse im wesentlichen parallel zur Längsachse der Lenksäule liegende Schnecke mit einem Antriebsmotor koaxial gekuppelt werden kann und auf engstem Raum unterhalb der Lenksäule an dem Untergehäuse zu befestigen ist.

Auf der Zeichnung ist ein Ausführungsbeispiel der Erfindung dargestellt. Es zeigen:

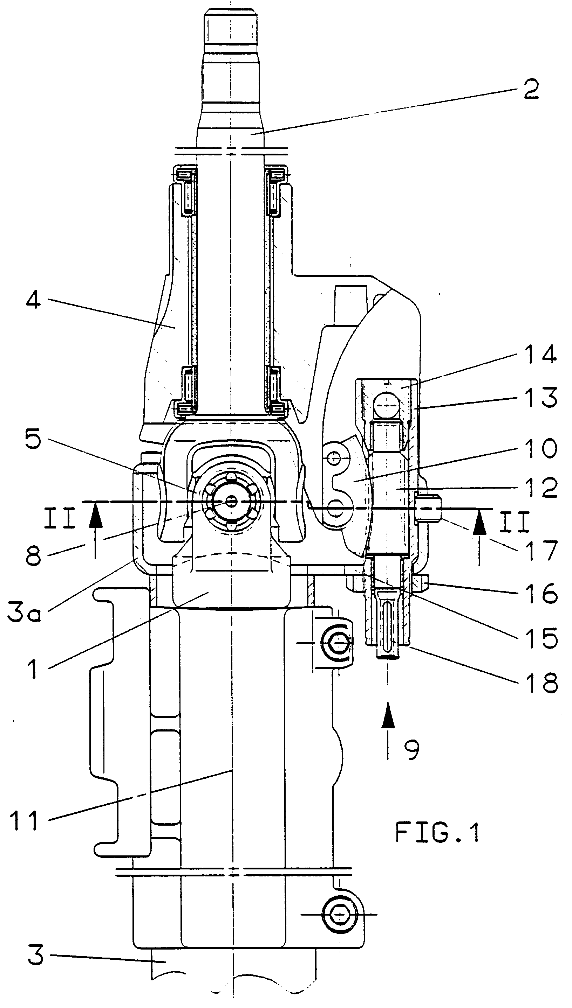

- Figur 1: einen Schnitt in einer Achsebene durch das Obergehäuse einer Lenksäule mit teilweiser Seitenansicht des Untergehäuses und

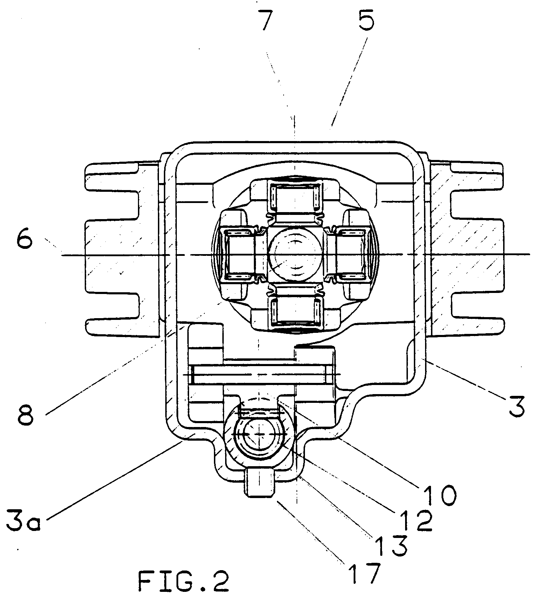

- Figur 2: einen Querschnitt nach der Linie II - II in der Figur 1..

Das Ausführungsbeispiel zeigt eine Lenksäule aus einer Unterwelle 1, einer Oberwelle 2, einem Untergehäuse 3 und einem Obergehäuse 4. Die Unterwelle 1 und die Oberwelle 2 sind durch ein Kreuzgelenk 5 miteinander verbunden, dessen Gelenkachsen 6 und 7 in einer Querebene liegen und sich in einem Mittelpunkt 8 kreuzen. Beispielsweise dargestellt ist ein Kreuzgelenk mit einem Gelenkkreuz, dessen zapfenförmige Enden in Gabelenden einerseits der Unterwelle 1 und andererseits der Oberwelle 2 gelagert sind. Die Ausbildung dieses Kreuzgelenkes ist jedoch nicht Gegenstand der Erfindung. Auf dem oberen freien Ende der Oberwelle 2 ist das in der Zeichnung nicht dargestellte Lenkrad des Kraftfahrzeuges befestigbar.

Das Untergehäuse 3 und das Obergehäuse 4 sind durch ein Schneckengetriebe mit dem allgemeinen Bezugszeichen 9 miteinander verbunden. Dieses Schneckengetriebe besteht aus einem an dem Obergehäuse 4 befestigten Schneckenradsegment 10, dessen Mittelpunkt im Mittelpunkt 8 der Gelenkachsen 6 und 7 liegt und welches parallel zur Längsachse 11 der Lenksäule ausgerichtet ist, und aus einer Schnecke 12, die in einem Rohrgehäuse 13 drehbar gelagert und mit diesem Rohrgehäuse 13 an dem Untergehäuse 3 befestigt ist. Das eine Lager dieser Schnecke 12 ist in einem Lagerkörper 14 angeordnet, welches in dem Rohrgehäuse axial verschraubbar angeordnet ist. Das andere Lager der Schnecke 12 stützt sich in dem Rohrgehäuse 13 gegen eine innere Ringschulter ab, so daß die Schnecke 12 durch das Verschrauben des Lagerkörpers 14 axial unter Spannung gesetzt werden kann, um jedwedes Axialspiel aus der Lagerung der Schnecke 12 herauszunehmen.

Das Rohrgehäuse 13 ist in einer sich radial ausdehnenden Ausnehmung 15 eines glockenförmig ausgebildeten Randteils 3a des Untergehäuses 3 eingesetzt und mittels einer Befestigungsmutter 16, die eine äußere Ringschulter des Rohrgehäuses 13 gegen den Boden der glockenförmigen Randausbildung 3a des Untergehäuses 3 zieht, fest verschraubbar. Radial stützt sich das Rohrgehäuse 13 innen gegen die Wand des glockenförmigen Randes 3a des Untergehäuses 3 ab. Mittels einer in der Wandung des Glockenrandes 3a verdrehbaren Stellschraube 17 kann auf das Rohrgehäuse 13 eine radial zum Mittelpunkt 8 gerichtete Vorspannung auf das Rohrgehäuse 13 ausgeübt werden, um ein eventuelles Spiel zwischen der Schnecke 12 und dem Schneckenradsegment 10, welches mit seiner Verzahnung einen Ausschnitt der Wandung des Rohrgehäuses 13 durchgreift, auszugleichen.

Auf das auf dem Rohrgehäuse 13 an dessen Befestigungsseite herausgeführte Kupplungsende 18 der Schnecke 12 sind komplementäre Glieder einer mit einem Antriebsmotor verbundenen Kupplung aufschiebbar. Dieser Antriebsmotor ist aus Gründen der besseren Übersicht auf der Zeichnung nicht dargestellt.

### BEZUGSZEICHENLISTE:

- 1: Unterwelle
- 2: Oberwelle
- 3: Untergehäuse
- 3a: Glockenrand
- 4: Obergehäuse
- 5: Kreuzgelenk
- 6: Gelenkachse
- 7: Gelenkachse
- 8: Mittelpunkt
- 9: Schneckengetriebe
- 10: Schneckenradsegment
- 11: Längsachse
- 12: Schnecke
- 13: Rohrgehäuse
- 14: Lagerkörper
- 15: Ausnehmung
- 16: Befestigungsmutter
- 17: Stellschraube
- 18: Kupplungsende

## Patentansprüche

1. In der Neigung des Lenkrades verstellbare Lenksäule für Kraftfahrzeuge, bei der eine Lenkwelle aus einer Unterwelle und einer Oberwelle, die durch ein Kreuzgelenk miteinander verbunden sind, in einem Gehäuse aus einem karosseriefesten Untergehäuse und einem demgegenüber um eine Achse quer zur Längsachse der Lenksäule beweglichen Obergehäuse drehbar gelagert ist, die beide durch ein Schneckengetriebe bestehend aus einem Schneckenradsegment (10), welches an dem Obergehäuse (4) fest angeordnet ist, mit dem Mittelpunkt (8) im Achsenkreuz des Kreuzgelenks (5) liegt und parallel zur Längsachse (11) der Lenksäule ausgerichtet ist, und aus einer in die Verzahnung des Schneckenradsegments (10) eingreifenden Schnecke (12), die an dem Untergehäuse (3) karosseriefest gelagert ist, verstellbar miteinander verbunden sind, dadurch gekennzeichnet, daß die Schnecke (12) motorisch antreibbar und in einem am Untergehäuse (3) befestigten Rohrgehäuse (13) mit einem Ausschnitt für den Durchgriff der Schneckenverzahnung durch axial gegeneinander verspannbare Lager gelagert ist, wobei das Rohrgehäuse (13) in einem glockenförmig ausgebildeten Rand (3a) des Untergehäuses (3) befestigt ist und sich im Bereich des Zahneingriffes der Schnecke (12) und des Schneckenradsegmentes (10) gegen den Glockenrand (3a) mittels einer Stellschraube (17) abstützt.

2. Lenksäule nach Anspruch 1, dadurch gekennzeichnet, daß das Rohrgehäuse (13) im Eingriffsbereich der Schneckenradverzahnung in die Schneckenverzahnung in Richtung gegen das Schneckenradsegment (10) mit einer Vorspannung belastbar ist.

3. Lenksäule nach Anspruch 2, dadurch gekennzeichnet, daß das Rohrgehäuse (13) mit dem einen Ende mittels einer Verschraubung (16) aus einem Außengewinde auf dem Rohrgehäuse (13) und einer in dieses eingreifenden Befestigungsmutter (16) in einer Ausnehmung (15) des Untergehäuses (3) befestigt ist.

4. Lenksäule nach Anspruch 2 und 3, dadurch gekennzeichnet, daß das Lager für die Schnecke (12) am freien Ende des Rohrgehäuses (13) in einem axial in dem Rohrgehäuse verschraubbaren Lagerkörper (14) ausgebildet ist.

## Claims

1. Steering column for motor vehicles which can be adjusted in terms of the inclination of the steering wheel, wherein a steering shaft consisting of a lower shaft and an upper shaft, which are connected together by a universal joint, is rotatably mounted in a housing consisting of a lower housing, which is rigid with the body, and an upper housing, which can move with respect to the lower housing about an axis transversely to the longitudinal axis of the steering column, the two being connected together in an adjustable manner by a worm gear unit consisting of a worm wheel segment (10) which is rigidly disposed on the upper housing (4), lies with the centre point (8) at the intersection of the axes of the universal joint (5) and extends parallel to the longitudinal axis (11) of the steering column, and of a worm (12) which meshes with the tooth system of the worm wheel segment (10) and is mounted on the lower housing (3) so as to be rigid with the body, characterised in that the worm (12) can be motor-driven and is mounted in a tubular housing (13), which is secured to the lower housing (3) and has a cutaway portion for the passage of the worm thread, by means of bearings which can be tensioned axially towards one another, the tubular housing (13) being secured in a bell-shaped edge (3a) of the lower housing (3) and being supported against the bell edge (3a) by means of an adjusting screw (17) in the region in which the thread of the worm (12) meshes with the teeth of the worm wheel segment (10).

2. Steering column according to claim 1, characterised in that the tubular housing (13) can be preloaded towards the worm wheel segment (10) in the region in which the worm wheel tooth system meshes with the worm thread.

3. Steering column according to claim 2, characterised in that the tubular housing (13) is secured at one end in a recess (15) in the lower housing (3) by means of a screw connection (16) consisting of an external thread on the tubular housing (13) and a fastening nut (16) engaging with this thread.

4. Steering column according to claims 2 and 3, characterised in that the bearing for the worm (12) is formed at the free end of the tubular housing (13) in a bearing body (14) which can be axially screwed into position in the tubular housing.

## Revendications

1. Colonne de direction pour véhicules automobiles, dont l'inclinaison du volant peut être réglée, dans laquelle un arbre de direction, formé par un arbre inférieur et par un arbre supérieur, reliés l'un à l'autre par l'intermédiaire d'un joint de cardan, est monté rotatif dans un carter formé par un carter inférieur solidaire de la carrosserie et par un carter supérieur mobile par rapport au carter inférieur autour d'un axe transversal par rapport à l'axe longitudinal de la colonne de direction, les deux carters étant reliés l'un à l'autre de manière réglable par un engrenage à vis sans fin comprenant un segment (10) de roue-vis qui est agencé de manière fixe au carter supérieur (4), qui se trouve avec le centre (8) dans le système d'axe du joint de cardan (5) et qui est orienté parallèlement par rapport à l'axe longitudinal (11) de la colonne de direction, et une vis sans fin (12) engrenant dans la denture du segment (10) de roue-vis et montée de façon solidaire de la carrosserie, caractérisée en ce que la vis sans fin (12) peut être entraînée par un moteur et en ce qu'elle est montée, au moyen de paliers pouvant être mis axialement sous contrainte l'un par rapport à l'autre, dans un carter tubulaire (13) fixé au carter inférieur (3) et comprenant une découpure pour le passage de la denture de la vis sans fin, le carter tubulaire (13) étant fixé à un bord (3a) en forme de cloche du carter inférieur (3) et étant en appui contre le bord (3a) en forme de cloche, au moyen d'une vis de réglage (17), dans la zone d'engrenage de la vis sans fin (12) et du segment (10) de roue-vis.

2. Colonne de direction selon la revendication 1, caractérisée en ce que le carter tubulaire (13) peut être sollicité par une précontrainte, en direction du segment (10) roue-vis, dans la zone d'engrenage de la denture de la roue-vis dans la denture de la vis sans fin.

3. Colonne de direction selon la revendication 2, caractérisée en ce que le carter tubulaire (13) est fixé par l'une de ses extrémités dans un évidement (15) du carter inférieur (3) au moyen d'un raccord (16) à vis comportant un filetage extérieur formé sur le carter tubulaire (13) et un écrou de fixation (16) engrenant dans ce filetage extérieur.

4. Colonne de direction selon la revendication 2 et 3, caractérisée en ce que le palier pour la vis sans fin (12) est formé à l'extrémité libre du carter tubulaire (13) dans un corps de palier (14) pouvant être vissé axialement dans le carter tubulaire.
